Europäisches Patentamt

European Patent Office

Office européen des brevets

(19)

(11) Publication number: **0 203 658 B1**

## (12) EUROPEAN PATENT SPECIFICATION

(45) Date of publication of patent specification: **03.04.91**

(51) Int. Cl.⁵: **C04B 28/34**, //(C04B28/34, 14:06,14:08,20:10,22:08)

(21) Application number: **86200851.3**

(22) Date of filing: **16.05.86**

(54) Magnesium phosphate fast-setting cementitious compositions containing set retardants.

(30) Priority: **20.05.85 US 735918**

(43) Date of publication of application:
**03.12.86 Bulletin 86/49**

(45) Publication of the grant of the patent:
**03.04.91 Bulletin 91/14**

(84) Designated Contracting States:
**BE CH DE FR GB IT LI NL SE**

(56) References cited:
**EP-A- 0 133 733**
**FR-A- 2 291 951**

(73) Proprietor: **STAUFFER CHEMICAL COMPANY**

**Westport Connecticut 06880(US)**

(72) Inventor: **Sherif, Fawzy Gamaleldin**
**2 Babcock Court**
**Stony Point New York 10980(US)**

(74) Representative: **Smulders, Theodorus A.H.J.,**
**Ir. et al**
**Vereenigde Octrooibureaux Nieuwe Parklaan**
**107**
**NL-2587 BP 's-Gravenhage(NL)**

**Description**

BACKGROUND OF THE INVENTION

1. Field of the Invention

This invention relates to fast-setting magnesium phosphate cementitious compositions. More particularly, it relates to improved compositions containing an oxy-boron compound which retards the initial setting time, reduces the amount of water required, and increases the compressive strength of the resulting hardened mass.

2. Related Art

Cementitious compositions having a very fast setting time and prepared by mixing a magnesium-containing component with an ammonium phosphate component and an optional aggregate are popular for use in repairing or patching cracks, holes and spalled areas of highways, airfield pavements and bridge decks, as well as for a variety of commercial and industrial applications.

US-A-3,879,209 (Limes et al., April 22, 1975) discloses a process for making such a fast-setting concrete comprising establishing a mixture of an aggregate, containing at least 10 percent by weight of magnesia, and ammonium phosphates in aqueous solution. This patent discloses that a commercial agricultural fertilizer product known as sequestered phosphatic solution (SPS) is particularly suitable as a source of the ammonium phosphate. This reference is one of many references which disclose a class of magnesium phosphate fast-setting cementitious compositions which when mixed with an aqueous component sets at ambient temperatures in substantially less than one-half hour after mixing. The strength development of these compositions is sufficiently rapid to permit, e.g. automobile traffic thereover, within a few hours following application. Additionally, these compositions exhibit excellent adhesion to various substrates, e.g. Portland cement concrete and steel, and they attain high compressive strength and are quite durable.

US-A-2,522,548 (Streicher, September 19, 1950) discloses the preparation of phosphate gel binders by reacting metal oxides, e.g. magnesium oxide, and primary phosphate solutions. Streicher further discloses that borax acts as an accelerating agent up to about 0.5 percent based on the amount of filler used in the phosphate gel binder. However, by adding more than 0.5 percent of borax and up to 1 percent thereof an increased retarder action is produced. However, this reference is directed to the use of these phosphate gel binders in a refractory application and further states that the primary ammonium phosphate is not effective in its process.

US-A-9,475,188 (Woodhouse, October 28, 1969) discloses a refractory composition comprising a liquid bonding agent, for example, sequestered phosphatic solution, that is diammonium phosphate and polyphosphate, absorbed onto an absorbent, for example, quartzite, and a particulate refractory substance containing MgO. This reference states that advantageously 0.5 to 2 percent of boric acid can be incorporated and that short setting times were considered undesirable. However nowhere does this reference state that boric acid overcomes this undesirable setting time. This reference further states that phosphoric acid and magnesia resulted in relatively low strength chemically bonded composition due to their rapid reaction. Again, this reference is directed to refractory compositions and does not disclose the compositions of the present invention. EP-A-0133733 discloses a particularly effective solid phosphorus pentoxide material suitable for use in these fast-setting magnesium phosphate cements. This material is prepared by a process which comprises mixing a porous material with a liquid phosphorus pentoxide material and heating the mixture until a dry solid is produced. This solid phosphorus pentoxide material can then be dry blended with a solid component comprising magnesium oxide, magnesium hydroxide, magnesium carbonate or mixtures thereof. An aggregate can optionally be added to this dry blend. When hydrated, this dry blend has been found particularly advantageous in the fast-setting magnesium phosphate cement applications described above. However, when the ambient temperature is high, e.g. in the summer time or year round in tropical climates; the initial setting time of this composition is reduced. Setting times of from about 1 to about 10 minutes do not allow the operator to properly mix the material and apply it in its end use application prior to the material setting and thereby becoming unworkable. A composition with a retarded initial setting time would be advantageous. However, this retarded setting time should not be so long that the advantages of the fast-setting cement are lost. The retarder used in the cement should not reduce high early strength to allow, for example, traffic to flow after pot hole repair within a few minutes.

US-A-3,960,580 (Stierli et al., June 1, 1976) discloses that the setting time of quick-setting magnesium oxide/ammonium phosphate concretes can be extended by the addition of specified oxy-boron compounds such as sodium borate. This reference further discloses that the incorporation of these oxy-boron compounds have also been found to increase only the extended or overall compressive strength of the composition. The retarder used reduced the high early strength of the cement which is a significant disadvantage because high early strength should be a major property of fast-setting magnesium phosphate cements. The phosphate component of the cementitious compositions disclosed by Stierli et al. appears to contemplate either a dry solid monoammonium phosphate component, or a solid monoammonium phosphate component comprising a mixture of monoammonium phosphate and another solid phosphate selected from diammonium phosphate and sodium pyrophosphate. A solid activator component comprising a $P_2O_5$ material absorbed onto a porous material is not contemplated or disclosed.

Because the normally fast-setting magnesium phosphate cements set even more rapidly with increasing ambient temperature, the time allowed for working these compositions, e.g. for mixing the composition with water and applying to, for example, a pot hole, becomes substantially reduced at the higher ambient temperatures. This reduction of working time poses a problem especially in summer and in tropical environments when the ambient temperature is significantly above 70°F(21°C). Attempts at on the spot corrective measures by the work crew such as adding additional water usually adversely affects the strength of the composition and accelerates setting time rather than retards setting time as reported by Stierli et al. Additionally, if sufficient water is added, the material does not set at all but becomes an impractical "soupy" mixture. There is a need, therefore, for a practical method of retarding the setting time without sacrificing high early compressive strength and thereby extending the working time of the magnesium phosphate fast-setting cementitious compositions and particularly the more effective generation of fast-setting cements as disclosed in EP-A-0133733 discussed above.

SUMMARY OF THE INVENTION

An object of this invention is to provide fast-setting magnesium phosphate cementitious compositions that give adequate working time at high ambient temperatures while maintaining the other desirable properties of these compositions. It is a further object of this invention to provide fast-setting magnesium phosphate cementitious compositions that allow the use of reduced quantities of water while increasing or at least maintaining the compressive strength of the hardened cementitious mass resulting after hydration and setting.

Other objects and advantages of the present invention are described elsewhere within this specification.

In accordance with the present invention, an improved dry fast-setting magnesium phosphate cementitious composition has now been discovered which is capable of setting to a hardened mass at ambient temperatures following the addition of 5-15 wt.% of water thereto which comprises (a) an ammonium phosphate component, (b) 4-50 wt. of a magnesium-containing component, and (c) 0.1-10 wt.% of an oxy-boron compound, characterized in that component (a) is a solid activator prepared from diatomaceous earth and an ammonium phosphate solution by the steps of mixing, drying and milling which solid activator comprises 10-70 wt.% of ammonium phosphate and 90-30 wt.% of diatomaceous earth.

DETAILED DESCRIPTION OF THE INVENTION

The dry fast-setting magnesium phosphate cementitious compositions of this invention generally comprise three essential constituents: a) a solid activator; b) a magnesium-containing component, and c) an oxy-boron compound.

The solid activator component is a composite comprising a specific $P_2O_5$ material absorbed onto a specific porous material. This activator can be prepared by mixing the porous material with the liquid phosphorus pentoxide material then heating the mixture until a dry solid is produced. The dry solid is then milled.

The liquid phosphorus pentoxide material is an ammonium phosphate solution, preferably an ammonium phosphate fertilizer solution. This fertilizer solution contains a mixture of ortho- and polyphosphates and in its original aqueous state undergoes continuous hydrolysis while standing whereby the weight ratios of the different phosphate forms keep changing, usually from high polyphosphate and low orthophosphate contents to low polyphosphate and high orthophosphate contents as the fertilizer ages. The polyphosphates of this fertilizer solution can include pyro-, tri-, tetra-, etc., phosphate species. Because of this continuous hydrolysis, magnesium phosphate cements using liquid ammonium phosphate fertilizer by itself as the $P_2O_5$ component exhibit unpredictable qualities. Usually, when a fresh fertilizer solution is used, the cement mixture does not set at all or only forms a weak cement, and when an older fertilizer solution is used, the cement sets very rapidly with little or no working time to apply the cement. Liquid fertilizer solution upon standing precipitates hard to handle insolubles, and in cold weather the liquid freezes and gels creating more handling problems.

A particularly preferred fertilizer solution is Poly-N$^{(R)}$ 10-34-0 ammonium polyphosphate solution supplied by Arcadian Company and used primarily as an agricultural fertilizer. A typical analysis of the Poly-N$^{(R)}$ brand fertilizer shows 10.0 weight percent ammoniacal nitrogen and 34 weight percent total $P_2O_5$. Sixty percent of the total $P_2O_5$ is polyphosphate. The commercial product contains approximately 2 weight percent of impurities, which do not adversely effect its use in preparing the solid activator. The major impurities comprise approximately 0.5 weight percent iron, 0.5 weight percent sulfur, 0.2 weight percent magnesium (as MgO) and 0.15 weight percent of fluorine. This commercial product also contains approximately 50 weight percent water.

When the fertilizer solution is absorbed onto the porous material of this invention, the fertilizer is held in a bound form and this composition is much more thermally stable in a temperature range of from ambient to about 120° C, than the original fertilizer solution. The resulting dry solid maintains a constant phosphate distribution between the ortho-and polyphosphate species and does not hydrolyze as the original fertilizer solution would.

The porous material which is employed in this invention is diatomaceous earth.
The highly porous diatomaceous earth can absorb much more than 80 percent by weight, based on the weight of diatomaceous earth, of the ammonium phosphate-containing liquid, e.g. liquid ammonium phosphate fertilizer solution, and absorption of 225 percent and above are preferred. Upon drying the diatomaceous earth with the phosphate-containing liquid absorbed therein, the solid $P_2O_5$ activator forms.

The diatomaceous earth can comprise from about 30 percent to about 90 percent by weight of the solid activator with about 30 percent to about 65 percent being preferred; can have a density of from 7.0 to 19.5 pounds/cubic foot (0.112 to 0.312 gms/cc); can have a water absorption value of from 170 percent to 255 percent by weight; and can have a surface area of from 1 to 100 m$^2$/g. It is believed that when diatomaceous earth is mixed with liquid ammonium phosphate fertilizer and heated to form the dry solid activator, more than a physical entrapment of the $P_2O_5$ material occurs.

The liquid $P_2O_5$ material is mixed with the porous material at ambient temperature to form a semi-solid, slurry or paste. The amount of liquid $P_2O_5$ material added is important. Amounts up to that which will fill the pores of the porous material can be used with one drying step. Amounts exceeding the pore volume of the porous material can be absorbed with several drying steps. The semi-solid, slurry or paste is heated to a temperature of from about 60° C to about 200° C to drive off moisture and other volatile impurities until a dry solid is produced.

The rate of heating is adjusted so that, upon drying, the pores of the porous material are not blocked with the $P_2O_5$ material, but remain available to the aqueous component when the cement is made. Sufficient porous material should be used to have enough pore volume available to absorb a suitable amount of the $P_2O_5$ material. Upon drying, most of the aqueous component will be driven off, leaving solid $P_2O_5$ material deposited inside and over the walls of the microscopic pores.

The starting materials, i.e. the liquid $P_2O_5$ material, and the porous material are mixed in the proportions necessary to form a dry solid comprising from about 10 percent to about 70 percent by weight of the $P_2O_5$ material and from about 30 percent to about 90 percent by weight of the porous material in the resulting solid activator.

The solid activator prepared as described above is dry blended with a magnesium-containing component and an oxy-boron compound to yield a dry cementitious composition. capable of setting to a hardened mass at ambient temperatures when reacted with an aqueous component. The solid activator can optionally be milled and classified prior to being dry blended with the other components of the cementitious composition. The activator typically has a particle size range of from 100 to 325 mesh (0.04-0.15mm) and a surface area of from 0.1 to 10 m$^2$/g.

The solid activator can range from about 6 weight percent to about 90 weight percent of the cementitious composition, with a range from about 10 weight percent to about 25 weight percent being preferred.

The magnesium-containing component can be any material capable of releasing magnesium ions making said ions available to react to form a magnesium phosphate. Preferred magnesium-containing compounds are magnesium oxide, magnesium hydroxide and magnesium carbonate. These compounds

4

must be capable of being dry blended with the solid activator without reacting therewith. However, in the presence of an aqueous component the dry blend will react to form a monolithic solid. Mixtures of these magnesium compounds can also be employed. Magnesium borate can be used as both a source of magnesium ions and the oxy-boron compound.

A preferred magnesium-containing component is MgO. This MgO can be of low reactivity, of high reactivity or a mixture of low and high reactivity wherein the ratio of the constituents of the mixture is selected to achieve the working time and cement strength desired. This preferred magnesium-containing component can usually be from about 4 percent to about 50 percent by weight of the overall composition, with from about 5 to about 15 percent by weight being preferred.

The set retarding oxy-boron compound generally comprises those boron compounds containing at least one boron-oxygen linkage, hereinafter termed "oxy-boron" compounds. These compounds include, e.g., oxy acids of boron which contain one or more boron atoms such as, e.g., boric acid; salts of such acids, such as the alkali metal salts thereof, for example sodium borate (e.g. borax) and amine or ammonium salts thereof such as, e.g. ammonium borate; and esters of such acids, such as trialkoxy borates and triaryloxy borates, e.g. trimethyl borate. These oxy-boron additives can be added to the fast-setting compositions as already formed or preformed compounds, or boron-containing starting materials which yield oxy-boron additives upon contact with water can be used to generate the additive in situ . Mixtures of the above oxy-boron compounds can also be employed. A particularly preferred retarder is boric acid.

The oxy-boron compounds of this invention can be added to the fast-setting compositions and slurries of this invention in a variety of ways. They can be added as a dry solid by direct addition or by pre-blending with another dry solid, e.g., the magnesium-containing component. They can be added as a solution by dissolving them in the water used to hydrate the cement composition. They can also be added by dissolving them in the liquid $P_2O_5$ material that is absorbed onto the porous material during the preparation of the activator.

Generally, the fast-setting cementitious compositions of this invention can be used for producing fast-setting concrete structures, e.g., structures suitable for roadway construction and roadway patches or other load-bearing uses. However, in its broader aspects, the invention is generally applicable to preparing concrete structures with various characteristics, e.g., high or low strength, for a variety of other purposes as well. The characteristics of any particular concrete structures formed can depend upon the weight ratio of the various components, the nature of the aggregate employed, the temperature conditions of application and the curing conditions as well as other factors.

Fast-setting cement can be applied indoors or outdoors to concrete drives, storage yards, warehouse and factory floors to repair and restore damaged surfaces. Fast-setting cement can be used to fill structural cracks in slabs, and repair highway median barrier walls. This type of cement can be used in almost any situation requiring a quick, permanent repair of concrete. In addition, the fast-setting cement can be used for binding and coating metals and woods for structural and flame resistant applications.

A particulate aggregate, preferably graded sand, can be included in the dry blend in a controlled amount as a filler. Aggregate can greatly enhance the strength of the hardened concrete cement. Aggregate usage can range from 0 percent to 90 percent by weight of the dry mix containing aggregate with a range of from about 40 percent to about 80 percent by weight of the dry mix plus aggregate being preferred. Other aggregate materials which can be used include particles of competent rocks or rock-forming minerals such as granite, basalt, dolomite, andesite, feldspar, amphibole, pyroxene, olivine, gabbro, rhyolite, syenite, diorite, dolerite, peridotite, trachyte, obsidian, quartz, etc., as well as materials such as slag, cinders, fly ash, glass cullet, wood chips, and fibrous materials such as chopped metal wire (preferably steel), glass fibers, asbestos, cotton, and polyester and aramide fibers. Aggregates having different particle shapes and sizes can be used. Mixtures of different aggregates can also be used. The porous material used to absorb the liquid $P_2O_5$ material will further function as an aggregate.

The dry blend remains a free flowing powder until it is contacted with an aqueous component, preferably water, then a reaction occurs forming a fast-setting cement. The amount of aqueous component used is important. Too much water can convert the dry blend into a thin slurry that will not set until substantial dehydration occurs; and, too little water will not wet the dry blend sufficiently to allow the necessary chemical reaction. The optimum amount of water will depend upon the particular physical characteristics of the constituents of the dry blend, e.g., absorbency, surface area, etc. However, the optimum amount of water must be sufficient to adequately wet the dry blend and optional aggregate mixture to form a thick slurry or non-collapsible putty. This optimum amount of water can be determined on a blend by blend basis. The optimum amount of water can also depend upon the weight of the oxy-boron compound, the weight of the aggregate, and the temperature at which the cement is hydrated. Usually, the higher the weight of oxy-boron compound, the lower is the amount of water needed. The amount of water used can range from about 5 weight percent to about 15 weight percent of the overall composition with from about 8 to about 12 weight percent being preferred.

Generally, the setting time for fast-setting magnesium phosphate cements varies widely and can range from a few seconds up to a few hours. As a practical matter, the setting time must be sufficient to allow the dry blend to be thoroughly mixed with the aqueous component to form a slurry or a non-collapsible putty and be applied to the intended area, whether a mold or a patch, prior to hardening into a monolithic solid. In quantitative terms, fast-setting usually means that the cement hardens in less than 30 minutes, usually in about 1 to 15 minutes, and reaches more than 1,500 psi (10 Mpa) compressive strength in usually less than 2 hours.

The fast-setting magnesium phosphate cementitious compositions of this invention are characterized by a normal setting time of less than 1/2 hour, more often less than about 15 minutes, at ambient temperatures. It has been found that this initial setting time can be delayed within the range of from about 1 minute up to about 35 minutes or longer depending on the amount of oxy-boron compound used.

It has been found that when the oxy-boron compound is included in the composition of this invention the initial set time is increased, however there is a drastic decrease in the early strength of the resulting cement, particularly compressive strength measurements at the 2 hour and 24 hour time intervals. The compressive strength gradually increases over time. However, high early compressive strength is commercially very significant and desirable. It has been found that if the water used to hydrate the cementitious composition is reduced when the oxy-boron compound is used, the initial set time will be increased and the additional benefit of increased early compressive strength will also be achieved. Therefore, the use of the oxy-boron compound allows the use of less water and increases the early strength as well as retards initial set time.

The amount of oxy-boron compound used in the compositions of this invention can vary according to the degree of retardation desired and the amount of water reduction with the accompanying increase in early strength desired. Generally, an amount of oxy-boron compound ranging from about 0.1 to about 10 percent, preferably about 0.1 to about 5 percent by weight of the cementitious composition has been found suitable. A particularly preferred level of 0.5 weight percent has been found to be highly effective in both retarding setting time and allowing sufficient water reduction to achieve high early strength. At levels below 0.1 weight percent the oxy-boron compound has been found to allow reduced water usage with the accompanying increase in early compressive strength, however set retardation or initial set time is only minimally affected.

In a particular embodiment of the fast-setting magnesium phosphate cementitious composition of this invention, the solid activator is prepared by mixing diatomaceous earth with liquid ammonium phosphate fertilizer to form a semi-solid, drying the semi-solid and milling the dried semi-solid; the magnesium-containing component is a mixture of active and dead burned magnesium oxide; the oxy-boron compound is boric acid; and the aggregate is graded silica. In this embodiment, the water added to the composition can be reduced from that usually used when no oxy-boron compound is used. The resulting cement will exhibit both increased set time and increased early strength.

The following examples describe embodiments of the invention. Other embodiments will be apparent to one of ordinary skill in the art from a consideration of this specification or practice of the invention disclosed therein. It is intended that the specification and examples be considered as exemplary only, with the true scope and spirit of the invention being indicated by the claims which follow the examples.

## EXAMPLES

Activators were made by mixing 900g of Poly-N[R] 10-34-0 brand ammonium phosphate fertilizer solution (sold by Arcadian Chemical Company) and 400g of diatomaceous earth Standard Super Cell grade (Manville Corporation) then treating the mixture by heating at 120°C for 16 hours. The resulting dry solid was milled to allow 60 weight percent to pass through 200 mesh (0.07 mm). One hundred grams of activator was combined with 13.5g of active MgO and 40.5 grams of dead-burned MgO and 250g of graded silica aggregate of maximum size 1/4 inch (6 mm) to form 404g of a magnesium phosphate cementitious mix.

Various weight percent of boric acid were added to mixtures made as described above at room temperature of about 70°F (21°C). The boric acid was added by (1) blending it thoroughly with the cementitious mix prior to the addition of water or (2) dissolving the boric acid in water prior to its addition to the cementitious mix.

The following Table summarizes the results when the boric acid was added by blending with the dry

mix.

## TABLE I

| Run | Wt. Cement [g] | Wt. % Boric Acid, [g] | Water [ml] | Initial Set Time, [min] | Compressive Strength | | | |
|-----|-----|-----|-----|-----|-----|-----|-----|-----|
| | | | | | 2 hrs. | | 24 hrs. | |
| | | | | | psi | (MPa) | psi | (MPa) |
| 1 | 404 | 0.0 | 50.0 | 11.5 | 3,500 | (24) | 4,500 | (31) |
| 2 | " | 0.5 | 50.0 | 24.0 | 1,600 | (11) | 2,800 | (19) |
| 3 | " | 1.0 | 43.0 | 26.0 | 5,700 | (39) | 6,000 | (41) |
| 4 | " | 0.5 | 40.5 | 26.0 | 4,800 | (33) | 5,100 | (35) |
| 5 | " | 0.4 | 41.0 | 23.0 | 4,200 | (29) | 4,300 | (30) |
| 6 | " | 0.3 | 43.0 | 18.0 | 5,500 | (38) | 5,400 | (37) |
| 7 | " | 0.1 | 45.0 | 12.0 | 5,700 | (39) | 6,700 | (46) |
| 8 | " | 0.1 | 47.5 | 14.0 | 4,600 | (32) | 5,500 | (38) |

| Run | Wt. Cement [g] | Wt. % Boric Acid, [g] | Water [ml] | Initial Set Time, [min] | Compressive Strength | | | |
|-----|-----|-----|-----|-----|-----|-----|-----|-----|
| | | | | | 2 hrs. | | 24 hrs. | |
| | | | | | psi | (MPa) | psi | (MPa) |
| 1 | 404 | 0.0 | 50.0 | 11.5 | 5,000 | (34) | 7,500 | (52) |
| 2 | " | 0.5 | 50.0 | 24.0 | 3,500 | (24) | 5,600 | (39) |
| 3 | " | 1.0 | 43.0 | 26.0 | 7,600 | (52) | 9,400 | (65) |
| 4 | " | 0.5 | 40.5 | 26.0 | 5,700 | (39)> | 7,600 | (>52) |
| 5 | " | 0.4 | 41.0 | 23.0 | 5,900 | (41) | 7,300 | (50) |
| 6 | " | 0.3 | 43.0 | 18.0 | 6,600 | (46)> | 7,600 | (>52) |
| 7 | " | 0.1 | 45.0 | 12.0 | 8,100 | (56)> | 9,800 | (>67) |
| 8 | " | 0.1 | 47.5 | 14.0 | 6,400 | (44) | 8,200 | (57) |

The following table summarizes the results when the boric acid was added by dissolving it in the water used to make the cement.

## TABLE II

| Run | Wt. Cement [g] | Wt. % Boric Acid, [g] | Water [ml] | Initial Set Time, [min] | Compressive Strength | | | |
|-----|-----|-----|-----|-----|-----|-----|-----|-----|
| | | | | | 2 hrs. | | 24 hrs. | |
| | | | | | psi | (MPa) | psi | (MPa) |
| 1 | 404 | 1.0 | 43 | 29 | 4,900 | (34) | 5,600 | (39) |
| 2 | " | 0.5 | 43 | 19 | 5,700 | (39) | 6,000 | (41) |
| 3 | " | 0.4 | 43 | 17 | 5,300 | (37) | 5,600 | (39) |
| 4 | " | 0.3 | 45 | 15 | 4,900 | (34) | 5,400 | (37) |
| 5 | " | 0.1 | 47 | 12 | 4,200 | (29) | 5,000 | (34) |

The above results indicate that when boric acid was added using a similar amount of water as the control (Table I, run 1) the initial set time was increased from 11.5 to 24.0 minutes but the early compressive strength at 2 hours and 24 hours decreased drastically. When less water than the control was used with the boric acid, the initial set time again increased as above but the early strength was also improved. The use of boric acid at 0.5 weight percent appeared to be optimum. When boric acid was used at levels of 0.1 weight percent with less water than the control, the initial set time was close to the control, however the early strength increased significantly.

When these results are compared with those reported in U.S. Patent No. 3,960,580 (discussed above), it is observed that at the optimum level of usage of the oxy-boron compound (0.5 weight percent), the set time reported in this reference doubled but the early compressive strength (at 2 hours and 4 hours) was reduced by more than one-half. This patent indicates that the compressive strength continuously increased as time elapsed, however high early compressive strength is an essential requirement of fast-setting magnesium phosphate cements. The high early compressive strength reported in the data above is an extremely desirable commercial characteristic. The use of the oxy-boron compound in the compositions of this invention retard initial set times and yields the additional benefit of allowing the use of less water which results in commercially significant increases in both early and final compressive strengths of the resulting structure.

## Claims

1. A dry fast-setting magnesium phosphate cementitious composition capable of setting to a hardened mass at ambient temperatures following the addition of 5-15 wt % water thereto which comprises (a) an ammonium phosphate component, (b) 4-50 wt % of a magnesium-containing component calculated as MgO and (c) 0.1-10 wt % of an oxy-boron compound, characterized in that component (a) is a solid activator prepared from diatomaceous earth and an ammonium phosphate solution by the steps of mixing, drying and milling which solid activator comprises 10-70 wt % of ammonium phosphate and 90-30 wt % of diatomaceous earth.

2. The cementitious composition of Claim 1 wherein the solid activator is prepared by:
   i) mixing a porous material with a liquid $P_2O_5$ material to form a semi-solid,
   ii) drying the semi-solid, and
   iii) milling the dried semi-solid.

3. The cementitious composition of Claim 2 wherein the oxy-boron compound is added to the liquid $P_2O_5$ material during the preparation of the solid activator.

4. The cementitious composition of Claim 2 wherein the porous material is diatomaceous earth and the $P_2O_5$ material is liquid ammonium phosphate fertilizer.

5. The cementitious composition of Claim 4 wherein the oxy-boron compound is added to the liquid ammonium phosphate fertilizer.

6. The cementitious composition of Claim 1 wherein the magnesium-containing component is magnesium oxide, hydroxide, carbonate or mixtures thereof.

7. The cementitious composition of Claim 1 wherein the oxy-boron compound is blended with the magnesium-containing component.

8. The cementitious composition of Claim 1 wherein the oxy-boron compound is selected from the group consisting of oxy acids of boron, salts and esters thereof, and mixtures thereof.

9. The cementitious composition of Claim 1 which further comprises an aggregate.

10. The cementitious composition of Claim 4 wherein the magnesium-containing component is magnesium oxide, the oxy-boron compound is boric acid and which further comprises a silica aggregate.

11. The cementitious composition of Claim 1 wherein the oxy-boron compound is blended with the solid activator.

12. A method for setting a cementitious composition to a hardened mass by mixing a cementitious composition as claimed in any of claims 1-11 at ambient temperatures with 5-15 % of water.

**Revendications**

1. Une composition sèche de ciment de phosphate de magnésium à prise rapide, capable de prendre en une masse durcie a températures ambiantes après y avoir ajouté de l'eau à concurrence de 5-15 % en poids, qui comprend (a) du phosphate d'ammonium, (b) 4-50 % en poids d'un composant contenant du magnésium et calculé comme MgO, et c) 0,1-10 % en poids d'un composant oxyborique, caractérisé par le fait que le composant (a) est un activateur solide préparé par mélange, séchage et moulage de terre à diatomées et d'une solution de phosphate d'ammonium, ledit activateur solide comprenant 10-70 % en poids de phosphate d'ammonium et 90-30 % en poids de terre à diatomées.

2. La composition de ciment de la revendication 1, dans laquelle l'activateur solide est préparé en :
   i) mélangeant un matériau poreux avec du $P_2O_5$ liquide pour constituer un demi-solide,
   ii) séchant le demi-solide, et
   iii) moulant le demi-solide séché.

3. La composition de ciment de la revendication 2, dans laquelle le composé oxyborique est ajouté au $P_2O_5$ liquide pendant la préparation de l'activateur solide.

4. La composition de ciment de la revendication 2, dans laquelle le matériau poreux est de la terre à diatomées et le $P_2O_5$ est du phosphate d'ammonium, un fertilisant liquide.

5. La composition de ciment de la revendication 4, dans laquelle le composé oxyborique est ajouté au fertilisant liquide qui est du phosphate d'ammonium.

6. La composition de ciment de la revendication 1, dans laquelle le composant contenant du magnésium est de l'oxyde de magnésium, de l'hydroxyde, du carbonate ou des mélanges de ceux-ci.

7. La composition de ciment de la revendication 1, dans laquelle le composé oxyborique est mélangé au composant contenant du magnésium.

8. La composition de ciment de la revendication 1, dans laquelle le composé oxyborique est sélectionné dans le groupe se composant d'oxy-acides de bore, de sels et d'esters de ceux-ci, et de mélanges de ceux-ci.

9. La composition de ciment de la revendication 1, qui comprend en outre un agrégat.

10. La composition de ciment de la revendication 4, dans laquelle le composant contenant du magnésium est de l'oxyde de magnésium, le composé oxyborique est de l'acide borique, et qui comprend en outre un agrégat de silice.

11. La composition de ciment de la revendication 1, dans laquelle le composé oxyborique est mélangé à l'activateur solide.

12. Une méthode permettant la prise d'une composition de ciment en une masse durcie en mélangeant une composition de ciment, telle que celles revendiquées aux revendications 1-11, à températures ambiantes à de l'eau à concurrence de 5-15 % en poids.

**Ansprüche**

1. Trockene, schnell abbindende Magnesiumphosphat-Zementzusammensetzung, die nach Zugabe von 5 bis 15 Gew.% Wasser bei Raumtemperatur zu einer gehärteten Masse abbindbar ist, enthaltend (a) eine Ammoniumphosphatkomponente, (b) 4 bis 50 Gew.% einer magnesiumhaltigen Komponente, berechnet als MgO, und (c) 0,1 bis 10 Gew.% einer Oxyborverbindung, dadurch gekennzeichnet, daß die Komponente (a) ein fester Aktivator ist, hergestellt aus Diatomeenerde und einer Ammoniumphosphatlösung durch Mischen, Trocknen und Mahlen, welcher feste Aktivator 10 bis 70 Gew.% Ammoniumphosphat und 90 bis 30 Gew.% Diatomeenerde enthält.

2. Zementzusammensetzung nach Anspruch 1, wobei der feste Aktivator hergestellt ist durch:
   i) Mischen eines porösen Materials mit einem flüssigen $P_2O_5$-Material zu einem halbfesten Stoff,
   ii) Trocknen des halbfesten Stoffes und
   iii) Mahlen des getrockneten halbfesten Stoffes.

3. Zementzusammensetzung nach Anspruch 2, wobei die Oxyborverbindung bei der Herstellung des festen Aktivators dem flüssigen $P_2O_5$-Material zugegeben ist.

4. Zementzusammensetzung nach Anspruch 2, wobei das poröse Material Diatomeenerde und das $P_2O_5$-Material ein flüssiges Ammoniumphosphatdüngemittel ist.

5. Zementzusammensetzung nach Anspruch 4, wobei die Oxyborverbindung einem flüssigen Ammoniumphosphatdünger zugegeben ist.

6. Zementzusammensetzung nach Anspruch 1, wobei die magnesiumhaltige Komponente Magnesiumoxid, Hydroxid, Carbonat oder ihre Gemische ist.

7. Zementzusammensetzung nach Anspruch 1, wobei die Oxyborverbindung mit der magnesiumhaltigen Komponente vermischt ist.

8. Zementzusammensetzung nach Anspruch 1, wobei die Oxyborverbindung aus der Gruppe, bestehend aus Oxyborsäuren, ihren Salzen und Estern, gewählt ist.

9. Zementzusammensetzung nach Anspruch 1, die weiter ein Aggregat enthält.

10. Zementzusammensetzung nach Anspruch 4, wobei die magnesiumhaltige Komponente Magnesiumoxid ist, die Oxyborverbindung Borsäure ist und die weiter ein Kieselsäureaggregat enthält.

11. Zementzusammensetzung nach Anspruch 1, wobei die Oxyborverbindung mit dem festen Aktivator vermischt ist.

12. Verfahren zum Abbinden einer Zementzusammensetzung zu einer gehärteten Masse durch Mischen einer Zementzusammensetzung nach einem der Ansprüche 1 bis 11 bei Raumtemperatur mit 5 bis 15 Gew.% Wasser.